(19) Europäisches Patentamt

European Patent Office

Office européen des brevets

(11) **EP 1 370 451 B1**

(12) **EUROPÄISCHE PATENTSCHRIFT**

(45) Veröffentlichungstag und Bekanntmachung des Hinweises auf die Patenterteilung:
**06.10.2004  Patentblatt 2004/41**

(21) Anmeldenummer: 02727454.7

(22) Anmeldetag: **21.03.2002**

(51) Int Cl.$^7$: **B61D 27/00**, B60H 3/00

(86) Internationale Anmeldenummer:
**PCT/EP2002/003204**

(87) Internationale Veröffentlichungsnummer:
**WO 2002/074600 (26.09.2002 Gazette 2002/39)**

(54) **VERFAHREN UND ANORDNUNG ZUR KLIMATISIERUNG SCHNELL FAHRENDER FAHRZEUGE**

METHOD AND ASSEMBLY FOR CONTROLLING THE AIR CONDITIONING OF HIGH-SPEED VEHICLES

PROCEDE ET DISPOSITIF POUR LA CLIMATISATION DE VEHICULES RAPIDES

(84) Benannte Vertragsstaaten:
**AT BE CH CY DE DK ES FI FR GB GR IE IT LI LU MC NL PT SE TR**

(30) Priorität: **21.03.2001  DE 10114524**

(43) Veröffentlichungstag der Anmeldung:
**17.12.2003  Patentblatt 2003/51**

(73) Patentinhaber: **Bombardier Transportation GmbH**
**13627 Berlin (DE)**

(72) Erfinder: **ECKHARDT, Michael**
**13158 Berlin (DE)**

(74) Vertreter: **Karlhuber, Mathias et al**
**COHAUSZ & FLORACK**
**Patent- und Rechtsanwälte**
**Bleichstrasse 14**
**40211 Düsseldorf (DE)**

(56) Entgegenhaltungen:
**DE-A- 19 637 232        DE-C- 19 755 097**
**US-A- 5 725 425**

**Beschreibung**

Die Erfindung betrifft ein Verfahren zur Klimatisierung schnell fahrender Fahrzeuge, insbesondere Schienenfahrzeuge, bei dem zur Einhaltung wenigstens einer vorgegebenen Grenze wenigstens eines Luftqualitätswertes im Fahrzeuginnenraum Frischluft aus der Umgebung des Fahrzeugs angesaugt und über wenigstens eine Luftbehandlungseinrichtung aufbereitete Zuluft in den Fahrzeuginnenraum geleitet wird, die einen Frischluftanteil und/oder einen Umluftanteil an aus dem Fahrzeuginnenraum rückgeführter Umluft enthält. Sie betrifft weiterhin eine entsprechende Anordnung zur Klimatisierung schnell fahrender Fahrzeuge.

Die Erfindung eignet sich besonders für den Einsatz in Schienenfahrzeugen für den Personenverkehr mit einer Höchstgeschwindigkeit über 160 km/h. Sie ist hierauf aber nicht beschränkt.

Bei Fahrzeugen, insbesondere bei Schienen- und Magnetschwebefahrzeugen, treten infolge ihrer hohen Geschwindigkeit unerwünschte Reaktionen mit der Umgebung in Form von so genannten Druckereignissen auf, deren unmittelbare Einwirkung auf Fahrgäste bei genauer Dosierung der erforderlichen Frischluftmenge unterbunden wird.

Die bisher gebräuchlichen Klimasysteme haben den Nachteil, dass die Fahrgasträume unabhängig von der Besetzung mit der maximalen konstanten Frischluftmenge versorgt werden, d. h. dass bei jeder Besetzung unterhalb von 100 % die Frischluftmenge unnötig groß ist und der Energieverbrauch zur Konditionierung der Frischluft unverhältnismäßig hoch erscheint.

Die Offenlegungsschrift DE 44 32 277 A1 beschreibt ein Druckschutzsystem mit schnell veränderlichen Luftquerschnitten und der Möglichkeit, im Druckschutzfall über getrennt drehzahlstellbare Bypasslüfter mit steiler Förderkennlinie auf der Frischluft- und der Fortluftseite permanent einen geringeren Frischluftstrom bei Einhaltung der Grenzwerte des Innendrucks/der Innendruckänderung zu realisieren.

Dieses Druckschutzsystem führt, da zeitweise infolge von Druckereignissen die Frischluftzufuhr verringert oder unterbunden wird, wenigstens bei einer Besetzung nahe 100% zu einer schleichenden Unterwanderung der in den Normen DIN EN 13129 und UIC 553 geforderten Frischluftmengen, insbesondere besteht trotz der genannten Bypassluftförderung die Gefahr einer Überschreitung der zulässigen $CO_2$-Konzentrationen im Grenzleistungsbereich der Klimaanlage.

Die in DE 44 32 277 A1 genannten grundsätzlichen Nachteile anderer Druckschutzsysteme ausschließlich mit Druckschutzventilatoren, wie hoher erforderlicher Aufwand zur Lärmdämmung und hoher Energieaufwand, sind nicht ausgeräumt. Zusätzlich bedingt dieses System einen hohen Steuer- und Regelungsaufwand.

In der Patentschrift DE 196 49 664 C2 ist ein Verfahren zur druckgeschützten Belüftung von Hochgeschwindigkeitszügen beschrieben. Dabei werden die Öffnungsquerschnitte der Drosselklappen und Drehzahlen der Lüfter auf der Frischluft- und der Fortluftseite entsprechend ihrer Drossel- und Fördercharakteristik derart verstellt, dass sich der Innendruck und die Frischluftmenge bei Druckereignissen nur unwesentlich ändern und die Frischluftversorgung nur selten unterbrochen wird.

Nachteilig ist der systembedingt hohe bauliche Aufwand zur Ermöglichung hinreichend schneller Drehzahlstellung, wie frequenzstellbare Drehstromantriebe oder elektronisch kommutierte Gleichstromantriebe sowie der Aufwand zur schnellen Änderung der Öffnungsquerschnitte der Drosselklappen.

Die Europäische Patentanmeldung EP 0 751 054 A1 offenbart ein Druckschutzsystem, bestehend aus der Kombination einer Klimaanlage mit speziellen Druckschutzlüftern mit steiler Förderkennlinie, vorzugsweise der Flügelzellen- oder Wälzkolbenbauart, auf der Frischluft- und der Fortluftseite, was eine permanente Frischluftversorgung bei Einhaltung der Grenzwerte des Innendrucks/der Innendruckänderung gestattet.

Nachteilig ist der hohe bauliche Aufwand zur Lärmdämmung und der hohe Energieaufwand zum Betrieb dieses Systems.

Schließlich offenbart die Patentschrift DE 197 55 097 C1 ein gattungsgemäßes Ventilschließ-Spülluft-System, bei dem neben den auf der Frischluft- und Fortluftseite in Reihe angeordneten Druckschutzventilen und Lüftern parallel frischluftseitig ein weiteres Druckschutzventil und fortluftseitig ein weiterer Lüfter angeordnet sind, wodurch im Zusammenspiel mit einer Frischluft-Umluft-Klappe ermöglicht wird, zeitweise einen Spülbetrieb mit höherer Frischluftmenge als normal zur Senkung der $CO_2$-Konzentration infolge der bei Druckereignissen geschlossenen Druckschutzventile durchzuführen. Die Steuerung des Spülbetriebs erfolgt über eine Abschätzung des $CO_2$-Pegels im Fahrgastraum aus Erfahrungswerten sowie über den erwarteten oder bekannten Verlauf, d.h. Abfolge und vor allem Dauer, der Druckereignisse im Betrieb, aus denen die erforderliche Spülluftmenge berechnet wird.

Ein Nachteil liegt bei diesem System darin, dass je nach den für die Berechnungen verwendeten Annahmen im Betrieb, insbesondere im Spülbetrieb, ein vergleichsweise hoher Energieaufwand für die Konditionierung der aus Frischluft und Umluft zusammengesetzten Zuluft zu betreiben ist. Ein weiterer Nachteil dieses Systems liegt in der Vielzahl der erforderlichen Druckschutzventile, Klappen und Lüfter, was negativ für die Zuverlässigkeit des Gesamtsystems ist.

Zusammengefasst hat die bisher weitgehend getrennte Betrachtung der Klima- und Druckschutzsysteme zur Folge, dass im allgemeinen zu viel oder zu wenig, jedoch nur ausnahmsweise bedarfsgerecht gelüftet wird. Die Kombination der bisher gebräuchlichen Klima- und Druckschutzsysteme entspricht damit hinsichtlich Energieverbrauch bzw. Frischluftmenge nur unvollkommen den heute von Kunden gewünschten Anforderungen.

Aufgabe der Erfindung ist es, ein Verfahren und eine Anordnung der eingangs genannten Art zur Verfügung zu stellen, welches die beschriebenen Nachteile des Standes der Technik nicht oder zumindest in geringerem Maße aufweist und insbesondere eine energieoptimierte Frischluftversorgung ermöglicht.

Diese Aufgabe wird ausgehend von einem Verfahren gemäß dem Oberbegriff des Anspruch 1 durch die im kennzeichnenden Teil des Anspruchs 1 angegebenen Merkmale gelöst. Sie wird weiterhin ausgehend von einer Anordnung gemäß dem Oberbegriff des Anspruch 11 durch die im kennzeichnenden Teil des Anspruchs 11 angegebenen Merkmale gelöst.

Der vorliegenden Erfindung liegt die technische Lehre zu Grunde, dass man ein besonders energieeffizientes Verfahren zur Klimatisierung schnell fahrender Fahrzeuge erhält, wenn die Steuerung über Mittel zur Ermittlung des Luftqualitätswertes erfolgt, wobei der Frischluftanteil in Abhängigkeit von der Besetzung im Fahrzeuginnenraum derart minimiert gehalten wird, dass ein vorgegebener Toleranzbereich des Luftqualitätswerts zumindest in einem Normalbetrieb ohne Druckereignisse im wesentlichen eingehalten wird. Die Mittel zur Ermittlung des Luftqualitätswertes erlauben es dabei in vorteilhafter Weise, aus den so gewonnenen Erkenntnissen über die Luftqualität Rückschlüsse auf die Besetzung im Fahrzeuginnenraum zu ziehen, sodass in Abhängigkeit von dieser Abschätzung nur die minimal erforderliche Menge an Frischluft zugeführt werden muss, um die vorgegebenen Grenzen des Luftqualitätswertes einzuhalten. Diese erfindungsgemäße Minimierung der Frischluftzufuhr bedingt, dass zumindest im Normalbetrieb ohne Druckereignisse nur eine minimale Menge an Frischluft aufwändig konditioniert werden muss, sodass sich insgesamt der Aufwand für die Konditionierung der Zuluft deutlich, nämlich auf das zur Einhaltung der vorgegebenen Grenzen erforderliche Mindestmaß, reduziert.

Die Rückschlüsse auf die Besetzung im Fahrzeuginnenraum können im laufenden Normalbetrieb gezogen werden, indem beispielsweise der Luftqualitätswert kontinuierlich oder diskontinuierlich mit entsprechend geringen Abständen erfasst wird und unmittelbar zur Steuerung des Verhältnisses Frischluft/Umluft herangezogen wird. Alternativ kann zunächst für einen bestimmten Zeitraum mit einem vorgegebenen Verhältnis Frischluft zu Umluft belüftet wird und die sich dabei ergebende Veränderung des Luftqualitätswertes erfasst wird. Diese Veränderung kann dann mit einem oder mehreren Referenzwerten für dieses Verhältnis Frischluft zu Umluft verglichen werden, um Rückschlüsse auf die tatsächliche Besetzung zu ziehen. So kann die Besetzung ermittelt werden, indem die Veränderung beispielsweise mit den Einträgen einer Tabelle verglichen werden, die für das vorgegebene Verhältnis Frischluft zu Umluft unterschiedlichen Besetzungsgraden zugeordnete Veränderungswerte enthält. Es versteht sich, dass hierzu auch ein Druckschutzfall simuliert werden kann, bei dem das Frischluft zu Umluft gleich Null ist, d. h. nur Umluft als Zuluft zum Fahrzeuginneren gefördert wird.

Im Gegensatz zum Stand der Technik, bei dem letztlich nur darauf geachtet wird, dass eine obere Schranke des Luftqualitätswertes nicht überschritten wird, wird erfindungsgemäß also tatsächlich bedarfsgerecht minimiert und damit energieoptimiert belüftet.

Sofern die Besetzung es zulässt, wird die Frischluftzufuhr bevorzugt auch in anderen Betriebsmodi als dem Normalbetrieb derart minimiert gehalten. Gegebenenfalls kann der vorgegebene Toleranzbereich aber auch abhängig von bestimmten einwirkenden Lasten sein. So kann er zum Beispiel abhängig von der Temperatur, insbesondere der Außentemperatur, oder ähnlichen äußeren Lasten sein. Ebenso kann er natürlich besetzungsabhängig sein, d.h. in Abhängigkeit von der ermittelten, beispielsweise anhand der Messwerte abgeschätzten Besetzung vorgegeben werden.

Vorzugsweise wird der Frischluftanteil in Abhängigkeit von der Besetzung im Fahrzeuginnenraum derart minimiert gehalten, dass zumindest im Normalbetrieb ein vorgegebener enger Toleranzbereich des Luftqualitätswerts im wesentlichen eingehalten wird. Je enger der Toleranzbereich gewählt ist, desto geringer ist natürlich der zum Aufbereiten der Frischluft erforderliche Energieaufwand. Bevorzugt beträgt der Toleranzbereich des Luftqualitätswerts im wesentlichen höchstens 20% eines vorgegebenen Luftqualitätswerts. Weiter vorzugsweise liegt der Toleranzbereich höchstens bei 10% eines vorgegebenen Luftqualitätswerts.

Der Begriff Toleranzbereich soll hierbei den Differenzbereich zwischen der maximalen und minimalen zulässigen Abweichung von dem vorgegebenen Luftqualitätswert bezeichnen. Dabei muss der Toleranzbereich nicht symmetrisch zum vorgegebenen Luftqualitätswert angeordnet sein, sondern es können nach oben und unten unterschiedliche Abweichungen vorgesehen sein. So kann bei einem asymmetrisch angeordneten Toleranzbereich von 10% nach oben eine Abweichung von 2% vom vorgegebenen Luftqualitätswert vorgesehen sein, während nach unten eine Abweichung vom 8% vorgesehen ist. Bei einem symmetrisch angeordneten Toleranzbereich von 10% ist dann nach oben und unten eine Abweichung von 5% vom vorgegebenen Luftqualitätswert vorgesehen.

Weiterhin ist anzumerken, dass der vorgegebene Luftqualitätswert über die Zeit, d.h. über die Fahrstrecke variieren kann. So kann es beispielsweise vor einem längeren Druckschutzbetrieb in einem längeren Tunnel etc. erforderlich sein, den Luftqualitätswert entsprechend stark zu verbessern, um sicherzustellen, dass er sich über den Druckschutzbetrieb nicht über eine vorgegebene Grenze hinaus verschlechtert. Beispielsweise kann der $CO_2$-Gehalt entsprechend stark

abgesenkt werden müssen, um sicherzustellen, dass er sich in einem längeren Tunnel beim Druckschutzbetrieb nicht über den zulässigen Wert hinaus erhöht. Diese Absenkung kann schon in einem Spülbetrieb nach einem vorangegangenen Druckereignis erfolgen, bevor wieder in einen zweiten Normalbetrieb umgeschaltet wird. Da in diesem zweiten Normalbetrieb aber unter Umständen ein deutlich geringerer $CO_2$-Wert als in einem vorangegangenen ersten Normalbetrieb einzuhalten sein kann, wird der vorgegebene Luftqualitätswert, um den der Toleranzbereich einzuhalten ist, entsprechend abgesenkt.

Es lassen sich daher besonders enge Toleranzbereiche einhalten und daher mithin besonders hohe Energieeinsparungen erzielen, wenn bei bevorzugten Varianten des erfindungsgemäßen Verfahrens der vorgegebene Luftqualitätswert variiert wird. Diese Variation erfolgt vorzugsweise in Abhängigkeit von der Position des Fahrzeugs auf einem bekannten Streckenverlauf, d.h. in Abhängigkeit vom Eintrittszeitpunkt und der Dauer von Druckereignissen. Die Steuerung erfolgt dabei bevorzugt über Signale der externen Zugbeeinflussung.

Die Mittel zur Ermittlung des Luftqualitätswertes können den Luftqualitätswert grundsätzlich auf unterschiedliche Weise erfassen. Bevorzugt sind sie im Fahrzeuginnenraum oder einem Raum angeordnet, in dem etwa dieselbe Luftqualität herrscht, und erfassen einen für die Luftqualität repräsentativen Meßparameter, wie beispielsweise den $CO_2$-Gehalt oder andere für die Luftqualität repräsentative Meßparameter.

Durch den Einsatz entsprechender Sensoren wird ein Referenzwert der im Fahrzeuginnern herrschenden Konzentration entsprechender Riech- und Ekelstoffe permanent überwacht, was es gestattet, die erforderliche Frischluftmenge entsprechend der Besetzung und entsprechend der Häufigkeit der Druckereignisse zu dosieren. Es ist der Einsatz anderer Sensoren denkbar, die nicht bzw. nicht nur die $CO_2$-Konzentration, sondern die Konzentration der tatsächlich störenden Gase etc. überwachen.

Bei bevorzugten Varianten des erfindungsgemäßen Verfahrens ist vorgesehen, dass im Druckschutzfall in Folge eines äußeren Druckereignisses ein Druckschutzbetrieb erfolgt, in dem der Frischluftanteil im wesentlichen gleich Null ist. In einem solchen Druckschutzfall werden in der Regel so genannte Druckschutzventile aktiviert, welche das Fahrzeug sowohl frischluftseitig als auch fortluftseitig von der Umgebung abschotten. Nach Ende des Druckschutzfalls und vor der Umschaltung auf einen Normalbetrieb erfolgt dann ein Spülbetrieb, bei dem der Frischluftanteil gegenüber dem Frischluftanteil im Normalbetrieb gleich oder größer gehalten wird. Auch hier erfolgt der Spülbetrieb vorteilhafterweise wieder bedarfsgerecht, d.h. es wird nur dann tatsächlich mit entsprechend erhöhtem Frischluftanteil gespült, wenn in Folge hoher Besetzung nur hiermit eine ausreichend schnelle Verbesserung der Luftqualität möglich ist.

Vorzugsweise wird zur Steuerung des Frischluftanteils und des Umluftanteils im Spülbetrieb in einem ersten Schritt zur Abschätzung der Besetzung im Fahrzeuginnenraum ein für die Veränderung des Luftqualitätswertes während des Druckschutzbetriebs repräsentativer Veränderungswert ermittelt. Der Luftqualitätswert wird dann am Ende des Druckschutzbetriebs in einem ersten Vergleich mit einem vorgegebenen ersten Grenzwert verglichen. Schließlich wird in einem zweiten Schritt in Abhängigkeit von dem Veränderungswert und dem ersten Vergleich der Frischluftanteil während des Spülbetriebs bestimmt.

Bei vorteilhaften Varianten des erfindungsgemäßen Verfahrens wird in dem zweiten Schritt in Abhängigkeit von dem Veränderungswert und dem ersten Vergleich der Einsetzzeitpunkt des Spülbetriebs bestimmt. Je stärker die Veränderung im Druckschutzbetrieb ist, desto früher setzt dann bevorzugt der Spülbetrieb ein. Alternativ oder zusätzlich kann die Dauer des Spülbetriebs bestimmt werden. Je stärker die Veränderung im Druckschutzbetrieb ist, desto länger ist dann bevorzugt der Spülbetrieb. Ebenso kann alternativ oder zusätzlich noch die Intensität des Spülbetriebs bestimmt werden. Je stärker die Veränderung im Druckschutzbetrieb ist, desto intensiver ist dann bevorzugt der Spülbetrieb, d. h. mit umso größerem Luftstrom wird dann beispielsweise gespült. Mit allen diesen Varianten ist in vorteilhafter Weise eine einfache und vor allem bedarfsgerechte Spülung möglich.

Bei bevorzugten Ausführungen der Erfindung wird als Luftqualitätswert ein für die $CO_2$-Konzentration im Fahrzeuginnenraum repräsentativer Wert verwendet. So kann beispielsweise direkt die $CO_2$-Konzentration über einen entsprechenden Sensor gemessen werden. Zusätzlich oder alternativ kann auch ein für eine andere chemische oder biologische Meßgröße repräsentativer Wert verwendet werden. Hier können z. B. ebenso die Konzentrationen bestimmter chemischer Stoffe in der Luft gemessen werden, die einen Einfluss auf die Luftqualität haben, wie die Keimzahlen bestimmter schädlicher Keime etc.

Es versteht sich, dass zusätzlich natürlich auch noch weitere Luftqualitätswerte überwacht werden können und bei der Einstellung des Frischluftanteils berücksichtigt werden können. So kann beispielsweise die Luftfeuchtigkeit erfasst werden. Grundsätzlich können einzeln oder in Kombination alle Größen erfasst werden, aus denen, beispielsweise an Hand so genannter Behaglichkeitsformeln, Rückschlüsse auf die Qualität der Luft bzw. deren Wirkung auf die Reisenden gezogen werden können.

Bei vorteilhaften Varianten des erfindungsgemäßen Verfahrens ist vorgesehen, dass bei einem Normalbetrieb ohne Druckereignisse und zusätzlich oder alternativ bei einem ersten Spülbetrieb nach einem kurzen Druckereignis über eine Fortluft-Lüftereinrichtung Fortluft in die Umgebung des Fahrzeugs geleitet wird, wobei die Fortluft-Lüftereinrichtung Abluft aus dem Fahrzeuginnenraum mit einem ersten Luftstrom fördert. Demgegenüber fördert die Fortluft-Lüftereinrichtung bei einem zweiten Spülbetrieb nach einem hinreichend langen Druckereignis Abluft mit einem gegenüber dem ersten Luftstrom erhöhten zweiten Luftstrom, um gegenüber dem ersten Spülbetrieb in vorteilhafter Weise eine beschleunigte Anpassung des Luftqualitätswertes im Fahrzeuginnern an einen vorgegebenen Luftqualitätswert zu erzielen. Diese Betriebsart wird vorzugsweise so lange beibehalten, bis der Luftqualitätswert einen vorgegebenen Wert erreicht oder ein neues Druckereignis auftritt.

Eine weitere Energieeinsparung ergibt sich bei vorteilhaften Varianten, bei denen die Fortluft-Lüftereinrichtung bei Auftreten eines Druckereignisses abgeschaltet wird, sodass sie nicht gegen ein ohnehin geschlossenes Druckschutzventil fördern muss.

Die Umschaltung zwischen den einzelnen Betriebsmodi kann in Abhängigkeit von bestimmten durch entsprechende Sensoren erfassten Größen, wie beispielsweise dem Druck in der Umgebung des Zuges erfolgen. Bei bevorzugten Varianten des erfindungsgemäßen Verfahrens kann aber auch vorgesehen sein, dass die Umschaltung zwischen Betriebsarten, insbesondere die Umschaltung auf den Druckschutzbetrieb und zusätzlich oder alternativ auf den Spülbetrieb, bei dem der Frischluftanteil gegenüber dem Frischluftanteil im einem Normalbetrieb ohne Druckereignis gleich oder größer gehalten wird, durch ein Signal der externen Zugbeeinflussung ausgelöst wird. So kann beispielsweise vorgesehen sein, dass der Druckschutzfall oder der Spülbetrieb nicht durch eine tatsächlich erfasste Druckerhöhung auf einen Überdruck bzw. einen Druckabfall auf einen Normaldruck ausgelöst wird, sondern durch das Erreichen eines bestimmten Streckenabschnittes, in dem eine solche Änderung zu erwarten ist. Dies kann beispielsweise bei Erreichen des Anfangs bzw. Endes eines Tunnels oder dergleichen der Fall sein.

Die vorliegende Erfindung betrifft weiterhin eine Anordnung zur Klimatisierung schnell fahrender Fahrzeuge, insbesondere Schienenfahrzeuge, mit einer Zulufteinrichtung zum Einleiten von Zuluft in den Fahrzeuginnenraum, die eine Frischluftzufuhreinrichtung zum Zuführen von Frischluft aus der Umgebung des Fahrzeugs in den Fahrzeuginnenraum, eine Umluftrückführeinrichtung zum Rückführen von Umluft aus dem Fahrzeuginnenraum in den Fahrzeuginnenraum sowie wenigstens eine Luftbehandlungseinrichtung zum Aufbereiten der Zuluft umfasst, und einer damit verbundenen Steuereinrichtung zum Steuern des Verhältnisses zwischen dem Frischluftanteil und dem Umluftanteil der Zuluft, die zur Einhaltung wenigstens einer vorgegebenen Grenze des Luftqualitätswertes im Fahrzeuginnenraum ausgebildet ist. Die Steuereinrichtung umfasst erfindungsgemäß Mittel zur Ermittlung wenigstens eines Luftqualitätswertes im Fahrzeuginnenraum. Weiterhin ist die Steuereinrichtung zur Minimierung des Frischluftanteils derart ausgebildet, dass zumindest in einem Normalbetrieb ohne Druckereignisse ein vorgegebener Toleranzbereich des Luftqualitätswerts in Abhängigkeit von der Besetzung im Fahrzeuginnenraum im wesentlichen eingehalten wird.

Mit dieser erfindungsgemäßen Anordnung lassen sich die oben im Zusammenhang mit dem erfindungsgemäßen Verfahren beschriebenen Vorteile in der selben Weise erzielen, sodass hier lediglich auf die obigen Ausführungen Bezug genommen wird.

Vorzugsweise ist auch hier vorgesehen, dass die Steuereinrichtung zur Minimierung des Frischluftanteils in Abhängigkeit von der Besetzung im Fahrzeuginnenraum und im wesentlichen unter Einhaltung eines vorgegebenen engen Toleranzbereichs des Luftqualitätswerts ausgebildet ist. Wiederum beträgt der Toleranzbereich des Luftqualitätswerts vorzugsweise im wesentlichen höchstens 20%, weiter vorzugsweise höchstens 10% eines vorgegebenen Luftqualitätswerts.

Zur Abschätzung der Besetzung im Fahrzeuginnenraum ist die Steuereinrichtung bevorzugt zur Ermittlung eines für die Veränderung des Luftqualitätswertes während des Druckschutzbetriebs repräsentativen Veränderungswerts ausgebildet. Dabei ist sie dann weiterhin zum Vergleichen des Luftqualitätswerts in einem ersten Vergleich am Ende eines Druckschutzbetriebs mit einem vorgegebenen ersten Grenzwert ausgebildet sowie zum anschließenden Bestimmen des Frischluftanteils ausgebildet, der während eines Spülbetriebs nach dem Druckschutzbetrieb eingestellt wird, wobei diese Bestimmung in Abhängigkeit von dem Veränderungswert und dem ersten Vergleich geschieht.

Vorzugsweise ist die Steuereinrichtung zum Bestimmen des Einsetzzeitpunkts des Spülbetriebs und/oder der Dauer des Spülbetriebs und/oder der Intensität des Spülbetriebs in Abhängigkeit von dem Veränderungswert und dem ersten Vergleich ausgebildet.

Bei vorteilhaften Varianten der erfindungsgemäßen Anordnung umfassen die Mittel zur Ermittlung des Luftqualitätswerts einen entsprechenden Sensor für eine Meßgröße, die für die $CO_2$-Konzentration im Fahrzeuginnenraum repräsentativ ist. Im einfachsten Fall kann es sich hierbei um einen entsprechenden $CO_2$-Sensor handeln. Wie oben zum erfindungsgemäßen Verfahren ausgeführt, können aber auch beliebige andere Meßgrößen durch entsprechende Sensoren erfasst werden.

Um eine schnelle und bedarfsgerechte Anpassung des Luftqualitätswerts an einen vorgegebenen Wert zu erzielen ist vorzugsweise vorgesehen, dass eine durch die Steuereinrichtung gesteuerte Fortluft-Lüftereinrichtung zum Ableiten von Fortluft in die Umgebung des Fahrzeugs vorgesehen ist, die bei einem Normalbetrieb ohne Druckereignisse und/oder bei einem ersten Spülbetrieb nach einem kurzen Druckereignis aus dem Fahrzeuginnenraum einen ersten Luftstrom fördert und bei einem zweiten Spülbetrieb nach einem hinreichend langem Druckereignis zur gegenüber dem ersten Spülbetrieb beschleunigten Anpassung des Luftqualitätswertes im Fahrzeuginnern an den vorgegebenen Luftqualitätswert einen gegenüber dem ersten Luftstrom erhöhten zweiten Luftstrom fördert. Diese Betriebsart wird vorzugsweise so lange beibehalten, bis der Luftqualitätswert den vorgegebenen Wert erreicht oder ein neues Druckereignis auftritt.

Um diesen erhöhten zweiten Luftstrom zu erzielen, sind unterschiedliche Gestaltungen möglich. So kann die Fortluft-Lüftereinrichtung mehrere Lüfter umfassen, von denen einer oder mehrere zur Erhöhung des Luftstromes dann zugeschaltet werden. Ebenso kann der Strömungsquerschnitt entsprechend vergrößert werden. Bei vorteilhaften, weil einfach aufgebauten Varianten ist vorgesehen, dass die Fortluft-Lüftereinrichtung wenigstens einen Fortluft-Lüfter umfasst, der mindestens zweistufig drehzahlstellbar ausgebildet ist, um die Erhöhung des Luftstromes durch eine höhere Drehzahl erzielen zu können.

Bei besonders Energie sparenden Varianten ist vorgesehen, dass die Steuereinrichtung zum Abschalten des Fortluft-Lüfters bei Auftreten eines Druckereignisses ausgebildet ist.

Bei bevorzugten Ausführungsformen der erfindungsgemäßen Anordnung ist die Steuereinrichtung zur Umschaltung zwischen Betriebsarten, insbesondere zur Umschaltung auf einen Druckschutzbetrieb und zusätzlich oder alternativ auf einen Spülbetrieb, bei dem der Frischluftanteil gegenüber dem Frischluftanteil im einem Normalbetrieb ohne Druckereignis gleich oder größer gehalten wird, ausgebildet, die ausgelöst durch ein Signal der externen Zugbeeinflussung erfolgt.

Das Verhältnis zwischen Zuluft und Umluft kann in beliebiger Weise eingestellt werden. So können beispielsweise getrennte entsprechend veränderbare Lüftereinrichtungen für die Frischluft und die Umluft vorgesehen sein. Bei bevorzugten, weil besonders einfach zu realisierenden und auch hinsichtlich der zu fördernden Luftmengen einfach zu regelnden Varianten der erfindungsgemäßen Anordnung ist jedoch vorgesehen, dass die Zulufteinrichtung durch die Steuereinrichtung gesteuerte Mittel zum Einstellen des Verhältnisses zwischen dem Frischluftanteil und dem Umluftanteil der Zuluft umfasst. Vorzugsweise ist hierzu eine stellbare, weiter vorzugsweise eine stetig stellbare, Umluftblende im Bereich der Umluftrückführeinrichtung vorgesehen.

Besonders einfach lässt sich dies realisieren, wenn die Zulufteinrichtung einen ersten Zuluft-Lüfter umfasst, der Frischluft und Umluft fördert, sodass bei gleichbleibendem durch den Lüfter geförderten Luftstrom nur das Verhältnis zwischen Frischund Umluft verstellt wird.

Die Druckverhältnisse, insbesondere das Eintreten von Druckereignissen im Fahrzeuginnenraum, müssen bzw. muss nicht notwendigerweise unmittelbar durch entsprechende Sensoren erfasst werden. Es kann genügen, dass dies wie oben beschrieben durch Signale der externen Zugbeeinflussung erfasst wird.

Bevorzugt umfasst die Steuereinrichtung zur Erfassung und Berücksichtigung von Druckereignissen jedoch wenigstens einen Drucksensor zur Erfassung der Druckverhältnisse im Fahrzeuginnenraum, da hierdurch in vorteilhafter Weise eine Steuerung in Abhängigkeit von den tatsächlichen Verhältnissen erfolgen kann. Dieser ist vorzugsweise im Fahrzeuginnenraum angeordnet. Es können natürlich auch mehrere Drucksensoren vorgesehen sein. So können beispielsweise über die Länge eines Zuges aus mehreren Wagons mit unabhängigen Druckschutzeinrichtungen mehrere Drucksensoren verteilt sein, über welche die Druckschutzeinrichtungen einzeln und/oder in Gruppen aktiviert werden, um sicherzustellen, dass - beispielsweise bei einer Tunnelfahrt - der Druckschutzbetrieb nur so lange wie absolut nötig aufrecht erhalten bleibt. In diesem Zusammenhang sei angemerkt, dass der Begriff "Fahrzeuginnenraum" im Sinne der vorliegenden Erfindung den Bereich bezeichnen soll, der durch die entsprechende Anordnung versorgt wird. Dieser kann sich auf den gesamten Zug aber auch auf einzelne Wagons und/oder Gruppen von Wagons erstrecken.

Bei vorteilhaften Varianten des erfindungsgemäßen Verfahrens wird zum Druckschutz und zur Klimatisierung schnell fahrender Fahrzeuge Frischluft angesaugt und über eine Luftbehandlungseinrichtung in Form eines ein Luftbehandlungsgeräts in das Fahrzeuginnere und die gleiche Menge Luft als Fortluft aus dem Fahrzeuginnern geleitet. Dabei erfolgt die Steuerung über Mittel zur Ermittlung des Drucks und Mittel zur Ermittlung der Luftqualität. Über das Luftbehandlungsgerät wird nur soviel Frischluft konditioniert, wie aufgrund der Besetzung im Fahrzeuginnern erforderlich ist.

Eine bevorzugte Variante der erfindungsgemäßen Anordnung zum Druckschutz und zur Klimatisierung schnell fahrender Fahrzeuge besteht aus mehreren Komponenten einer Frischluftseite und einer Fortluftseite. Die Frischluftseite beinhaltet die Kombination eines ersten Lüfters und eines ersten Druckschutzventils. Die Fortluftseite beinhaltet die Kombination eines mindestens zweistufig drehzahlstellbaren, zweiten Lüfters und eines zweiten Druckschutzventils. Weiterhin beinhaltet die Anordnung Mittel zur Einstellung des Mischungsverhältnisses Frischluft/ Umluft und Mittel zur Konditionierung von Frischluft und Umluft. Zur Steuerung der Anordnung beinhaltet diese einen Drucksensor und/oder die Möglichkeit der Verarbeitung eines Signals der externen Zugbeeinflussung und Mittel zur Messung der Luftqualität im Fahrzeuginnern.

Insbesondere durch Einsatz eines $CO_2$-Sensors wird der $CO_2$-Gehalt als Referenzwert der im Fahrzeuginnern herrschenden Konzentration von Riech- und Ekelstoffen permanent überwacht, was es gestattet, die erforderliche Frischluftmenge entsprechend der Besetzung und entsprechend der Häufigkeit der Druckereignisse zu dosieren. Es ist der Einsatz anderer Sensoren denkbar, die nicht bzw. nicht nur die $CO_2$-Konzentration, sondern die Konzentration der tatsächlich störenden Gase überwachen.

Der Vorteil dieses Systems und anderer erfindungsgemäßer Systeme gegenüber den bisher bekannten Systemen mit Hochdrucklüftern mit sehr steiler Kennlinie (z. B. beschrieben in EP 0 751 054 A1) bzw. der Kombination aus derartigen Hochdrucklüftern und Druckschutzventilen (z. B. beschrieben in DE 44 32 277 A1) bzw. der Kombination aus schnell drehzahlstellbaren Lüftern und speziellen Drosselklappen (z. B. beschrieben in DE 196 49 664 C2), die alle zum Ziel haben, lediglich eine annähernd konstante Frischluftmenge unabhängig von der Besetzung zu fördern, besteht aus der Kombination der Senkung des Energieverbrauchs wegen des Entfalls der Hochdrucklüfter und Vermeidung der mit dem Betrieb derartiger Lüfter im allgemeinen verbundenen Lärmemissionen einerseits sowie der Senkung des Energieverbrauchs wegen der bedarfsgerechten Kühlung und Heizung andererseits.

Der Vorteil dieses Systems und anderer erfindungsgemäßer Systeme gegenüber den bisher bekannten Systemen mit mehreren frischluftseitigen Druckschutzventilen und mehreren fortluftseitigen Fortlüftern (z. B. beschrieben in DE 197 55 097 C1) besteht in der Minimierung der Zahl erforderlicher Komponenten und einer Senkung des Energieverbrauchs wegen der bedarfsgerechten Kühlung und Heizung.

Weitere vorteilhafte Ausgestaltungen der Erfindung ergeben sich aus den Unteransprüchen bzw. der nachstehenden Beschreibung bevorzugter Ausführungsbeispiele, welche auf die beigefügten Zeichnungen bezug nimmt. Es zeigen:

Fig. 1     eine schematische Darstellung einer bevorzugten Variante des erfindungsgemäßen Anordnung zur Durchführung einer ersten bevorzugten Variante des erfindungsgemäßen Verfahrens;

Fig. 2     den zeitlichen Verlauf eines Luftqualitätswertes bei Durchführung des Verfahrens zu Figur 1;

Fig. 3     den zeitlichen Verlauf eines Luftqualitätswertes bei Durchführung einer zweiten bevorzugten Variante des erfindungsgemäßen Verfahrens.

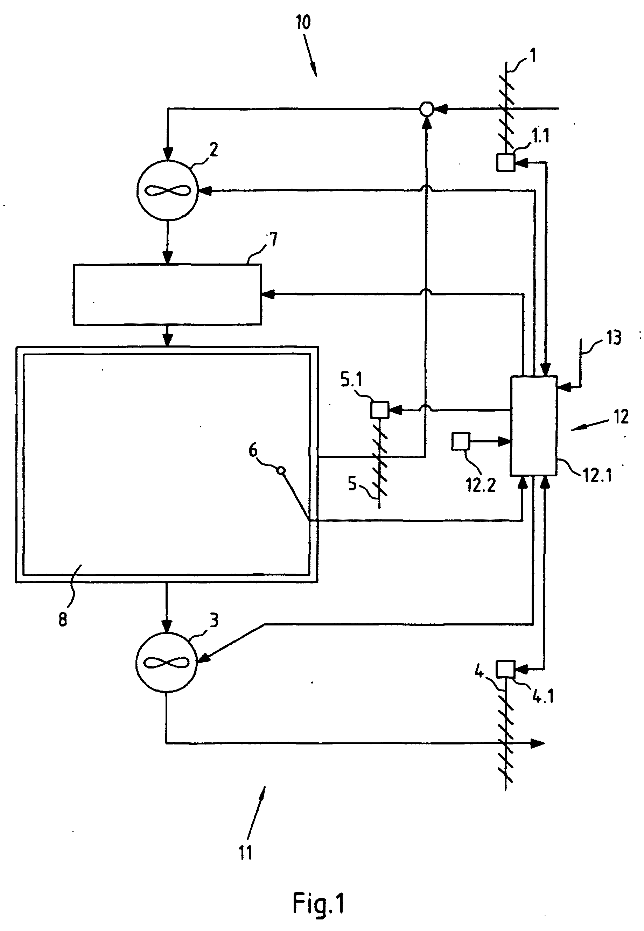

Die bevorzugte Ausführung der erfindungsgemäßen Anordnung zum Druckschutz und zur Klimatisierung eines schnell fahrenden Schienenfahrzeugs besteht gemäß Fig. 1 aus mehreren Komponenten einer Frischluftseite und einer Fortluftseite.

Auf der Frischluftseite umfasst die Anordnung eine Zulufteinrichtung 10 zum Einleiten von Zuluft in den Fahrzeuginnenraum 8. Die Zulufteinrichtung 10 umfasst in Kombination eine Frischluftzufuhreinrichtung in Form eines ersten Lüfters 2 konstanter Drehzahl und eines ersten Druckschutzventils 1, eine Umluftrückführeinrichtung in Form einer stetig stellbaren Umluftblende 5, über die Umluft mittels des ersten Lüfters 2 aus dem Fahrzeuginnenraum 8 in den Fahrzeuginnenraum 8 zurückgeführt wird, und eine Luftbehandlungseinrichtung in Form von einem oder mehreren Wärmetauschern 7.

Auf der Fortluftseite umfasst die Anordnung die Kombination einer Fortluft-Einrichtung 11 mit einer Fortluft-Lüftereinrichtung, die einen Fortluft-Lüfter in Form eines mindestens zweistufig drehzahlstellbaren, zweiten Lüfters 3 umfasst, und einem zweiten Druckschutzventil 4.

An die Lüfter 2, 3 werden keine besonderen Anforderungen bezüglich der Steilheit ihrer Förderkennlinie gestellt, es ist jeder beliebige Lüfter, beispielsweise axialer oder radialer Bauart denkbar.

Die Steuerung der Anordnung erfolgt über eine Steuerung 12.1 einer Steuereinrichtung 12, die mit den Lüftern 2, 3, den Stelleinrichtungen 1.1, 4.1 und 5.1 der Druckschutzventile 1, 4 und der Umluftblende 5 sowie dem Wärmetauscher 7 verbunden ist.

Zur Steuerung der Anordnung sind weiterhin ein Drucksensor 12.2 und die Möglichkeit der Verarbeitung eines Signals der externen Zugbeeinflussung vorgesehen, welches über die Signalleitung 13 zur Steuereinrichtung gelangt. Es versteht sich jedoch, dass der Drucksensor oder die Steuerung über Signale der externen Zugbeeinflussung bei anderen Varianten auch in Alleinstellung vorhanden sein können. Ebenso kann der Drucksensor auch an einer beliebigen anderen Stelle angeordnet sein, beispielsweise in der Stelleinrichtung 1.1 des Druckschutzventils 1, der Stelleinrichtung 4.1 des Druckschutzventils 4 oder im Fahrzeuginnenraum.

Weiterhin sind zur Steuerung der Anordnung mit der Steuerung 12.1 verbundene Mittel zur Erfassung eines Luftqualitätswertes in Form eines ein $CO_2$-Sensors 6 im Fahrzeuginnern 8 angeordnet. Alternativ könnte natürlich statt des $CO_2$-Sensors ein anderer Sensor, der nicht bzw. nicht nur die $CO_2$-Konzentration, sondern die Konzentration anderer chemischer oder biologischer Stoffe, beispielsweise der tatsächlich störenden Gase überwacht, verwendet werden.

Die Frischluft und die Umluft werden über die Wärmetauscher 7 der kombinierten Klima- und Druckschutzanordnung konditioniert.

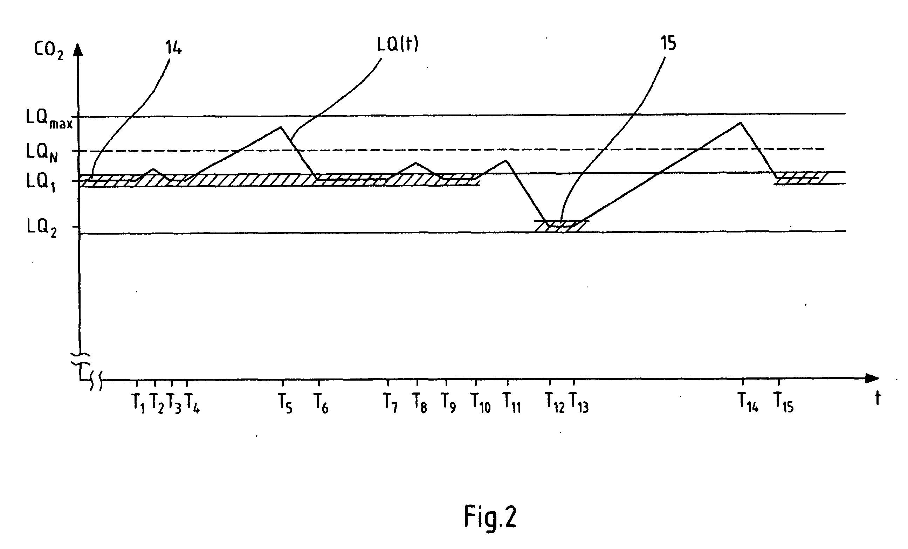

Die einzelnen Betriebsarten der kombinierten Klima- und Druckschutzanordnung werden nachfolgend anhand der Figur 1 und der Figur 2 erläutert, die für einen bestimmten Fahrstreckenabschnitt schematisch den zeitlichen Verlauf LQ(t) eines Luftqualitätswertes, nämlich der $CO_2$-Konzentration, bei Durchführung des erfindungsgemäßen Verfahrens mit der Anordnung aus Figur 1 darstellt:

Beim Betrieb ohne Druckereignisse sind das erste Druckschutzventil 1 und das zweite Druckschutzventil 4 geöffnet. Der erste Lüfter 2 fördert Frischluft aus der Umgebung und Umluft aus dem Fahrzeuginnern. Der zweite Lüfter 3 fördert Abluft mit niedriger Lüfterstufe. Die Stellung der Umluftblende 5, mithin das Mischungsverhältnis Frischluft/Umluft richtet sich nach der im Fahrzeuginnern herrschenden $CO_2$-Konzentration bzw. der tatsächlich herrschenden Konzentration der relevanten Schadstoffe, die permanent erfasst werden durch den $CO_2$-Sensor 6 bzw. einen anderen Sensor.

Die Steuerung der Umluftblende 5 erfolgt dabei in Abhängigkeit von der permanent erfassten im Fahrzeuginnern herrschenden $CO_2$-Konzentration und damit der tatsächlichen Besetzung im Fahrzeuginnenraum 8 so, dass der $CO_2$-Wert in einem ersten Normalbetrieb vor dem Zeitpunkt $T_1$ in einem vorgegebenen engen Toleranzbereich 14 um einen ersten vorgegebenen $CO_2$-Wert $LQ_1$ liegt. Dieser Toleranzbereich beträgt etwa 10% des ersten vorgegebenen $CO_2$-Werts $LQ_1$ und ist symmetrisch zu diesem angeordnet, d.h. die Abweichung von $LQ_1$ beträgt ±5% von $LQ_1$. Damit ist sichergestellt, dass über die Wärmetauscher 7 der Klimaanlage nur soviel Frischluft konditioniert wird, wie aufgrund der Besetzung im Fahrzeuginnern 8 erforderlich ist.

Zu einem Zeitpunkt $T_1$ tritt ein Druckereignis ein. Der Betrieb während eines Druckereignisses ist dadurch gekennzeichnet, dass bei Auftreten eines Druckereignisses, welches vom Drucksensor registriert wird, das erste Druckschutzventil '1 und das zweite Druckschutzventil 4 geschlossen und die Umluftblende 5 maximal geöffnet werden. Der erste Lüfter 2 läuft unverändert und fördert nun 100% Umluft aus dem Fahrzeuginnern 8. Der zweite Lüfter 3 wird von der Steuereinrichtung abgeschaltet und läuft daher nicht.

Unmittelbar nach dem Druckereignis, das zum Zeitpunkt $T_2$ endet, werden in einem ersten Spülbetrieb das erste Druckschutzventil 1 und das zweite Druckschutzventil 4 geöffnet und die Umluftblende 5 entsprechend der durch den $CO_2$-Sensor 6 erfassten $CO_2$-Konzentration im Fahrzeuginnern 8 geöffnet, sodass ein höherer Frischluftanteil als im ersten Normalbetrieb gefördert wird. Der erste Lüfter 2 läuft unverändert und fördert Frischluft aus der Umgebung und Umluft aus dem Fahrzeuginnern. Der zweite Lüfter 3 fördert einen ersten Luftstrom an Abluft mit niedriger Lüfterstufe. Zum Zeitpunkt $T_3$ wird wieder auf den ersten Normalbetrieb umgeschaltet, in dem dann wieder die frischluftminimierte Steuerung zur Einhaltung des Toleranzbereichs 14 erfolgt.

Nach einer Häufung von Druckereignissen oder einem langen Druckereignis, welches bei $T_4$ beginnt und bei $T_5$ endet, erkennt die Steuereinrichtung oder der $CO_2$-Sensor 6 bzw. ein anderer Sensor eine Überschreitung eines Normalwerts $LQ_N$ der $CO_2$-Konzentration bzw. der tatsächlich herrschenden Konzentration der relevanten Schadstoffe im Fahrzeuginnern 8. In diesem Fall werden zum Zeitpunkt $T_5$ in einem zweiten Spülbetrieb das erste Druckschutzventil 1 und das zweite Druckschutzventil 4 geöffnet und die Umluftblende 5 ganz geschlossen. Der erste Lüfter 2 läuft unverändert und fördert nun 100% Frischluft. Die zügige Absenkung der $CO_2$-Konzentration bzw. der tatsächlich herrschenden Konzentration der relevanten Schadstoffe im Fahrzeuginnern 8 wird unterstützt, indem der zweite Lüfter 3 einen gegenüber dem ersten Luftstrom erhöhten zweiten Luftstrom an Abluft mit hoher Lüfterstufe fördert. Diese Betriebsart wird bis zum Zeitpunkt $T_6$ beibehalten, zu dem der durch den $CO_2$-Sensor 6 bzw. ein anderer Sensor erfasste Normalwert $LQ_N$ der $CO_2$-Konzentration bzw. der tatsächlich herrschenden Konzentration der relevanten Schadstoffe im Fahrzeuginnern 8 ausreichend weit unterschritten ist bzw. bis ein neues Druckereignis auftritt.

Zum Zeitpunkt $T_6$ wird dann wieder in den ersten Normalbetrieb umgeschaltet, in dem dann wieder die frischluftminimierte Steuerung zur Einhaltung des Toleranzbereichs 14 erfolgt.

Zwischen den Zeitpunkten $T_7$ und $T_{10}$ erfolgt wiederum ein Betrieb, wie er oben schon für das Intervall $T_1$ bis $T_4$ beschrieben wurde.

Zum Zeitpunkt $T_{10}$ tritt erneut ein vergleichsweise kurzes Druckereignis ein, das bei $T_{11}$ endet. Aus dem Streckenverlauf und der Position und Geschwindigkeit des Fahrzeugs ist jedoch bekannt, dass zum Zeitpunkt $T_{13}$ ein sehr langes Druckereignis eintreten wird. Beeinflusst durch entsprechende Signale der externen Zugbeeinflussung schaltet die Steuereinrichtung daher in den oben beschriebenen zweiten Spülbetrieb, der bis zum Zeitpunkt $T_{12}$ dauert. Dabei wird durch die entsprechend der abgeschätzten tatsächlichen Besetzung des Fahrzeugs gewählte Dauer des zweiten Spülbetriebs die $CO_2$-Konzentration auf einen Wert $LQ_2$ unterhalb $LQ_1$ abgesenkt. Dies dient dazu, sicherzustellen, dass die Obergrenze $LQ_{max}$ der $CO_2$-Konzentration in dem nachfolgenden langen Druckereignis zwischen $T_{13}$ und $T_{14}$ nicht überschritten wird.

Zum Zeitpunkt $T_{12}$ wird dann auf einen zweiten Normalbetrieb umgeschaltet, in dem wie oben zum ersten Normalbetrieb beschrieben, die Steuerung des Frischluft-Umluft-Verhältnisses so erfolgt, dass ein zweiter Toleranzbereich 15 eingehalten wird. Die Spanne des Toleranzbereichs 15 entspricht dabei der Spanne des ersten Toleranzbereichs 14. Der Unterschied zum ersten Normalbetrieb besteht lediglich darin, dass der Toleranzbereich 15 um einen abgesenkten Wert $LQ_2$ eingehalten wird. Auch in dem zweiten Normalbetrieb erfolgt dann aber wieder die frischluftminimierte Steuerung zur Einhaltung des Toleranzbereichs 15.

Zum Zeitpunkt $T_{14}$ wird schließlich wieder in einen zweiten Spülbetrieb umgeschaltet, um die $CO_2$-Konzentration schnell auf den Wert $LQ_1$ abzusenken. Zum Zeitpunkt $T_{15}$ wird dann wieder in den ersten Normalbetrieb umgeschaltet.

Es versteht sich, dass die Steuerung des Frischluftanteils und des Umluftanteils, insbesondere im Spülbetrieb, bei anderen Varianten des erfindungsgemäßen Verfahrens auch so erfolgen kann, dass in der Steuereinrichtung in einem ersten Schritt zur Abschätzung der Besetzung im Fahrzeuginnenraum ein für die Veränderung des Luftqualitätswertes während des Druckschutzbetriebs repräsentativer Veränderungswert ermittelt wird. So kann beispielsweise die zeitliche Änderung dLQ des Luftqualitätswertes während des Druckschutzbetriebes zwischen den Zeitpunkten $T_n$ und $T_{n+1}$ ermittelt werden nach der Formel:

$$dLQ = \frac{\Delta LQ}{\Delta T} = \frac{LQ(T_{n+1})-LQ(T_n)}{T_{n+1}-T_n},$$

wobei $LQ(T_n)$ der Luftqualitätswert zum Zeitpunkt $T_n$ ist und $LQ(T_{n+1})$ der Luftqualitätswert zum Zeitpunkt $T_{n+1}$ ist. Aus diesem Veränderungswert dLQ kann dann anhand von Erfahrungswerten die tatsächliche Besetzung im Fahrzeuginnenraum abgeschätzt werden.

Der Luftqualitätswert am Ende des Druckschutzbetriebs zum Zeitpunkt $T_{n+1}$ wird dann in einem ersten Vergleich am Ende des Druckschutzbetriebs mit einem vorgegebenen ersten Grenzwert verglichen. In einem zweiten Schritt wird dann in Abhängigkeit von dem Veränderungswert dLQ und dem ersten Vergleich der Frischluftanteil während des Spülbetriebs in Abhängigkeit von der tatsächlichen Besetzung im Fahrzeuginnenraum bestimmt.

In dem zweiten Schritt kann dann in Abhängigkeit von dem Veränderungswert und dem ersten Vergleich der Einsetzzeitpunkt des Spülbetriebs und/oder die Dauer des Spülbetriebs und/oder die Intensität des Spülbetriebs bestimmt werden. Dabei wird bevorzugt auch die Position des Fahrzeugs auf der bekannten Fahrstrecke berücksichtigt, d.h. lange und oder stark gespült, wenn beispielsweise ein langes Druckereignis bevorsteht oder mehrere Druckereignisse in entsprechend kurzer Abfolge bevorstehen, um ein Ansteigen der $CO_2$-Konzentration über einen zulässigen Wert zu verhindern.

Aus dem Veränderungswert dLQ kann wie erwähnt anhand von Erfahrungswerten die tatsächliche Besetzung im Fahrzeuginnenraum abgeschätzt werden. Diese Abschätzung über die tatsächliche Besetzung kann bei anderen Varianten der Erfindung im übrigen auch für die Steuerung des Frischluft-Umluft-Verhältnisses im Normalbetrieb herangezogen werden. Um diese Abschätzung zu erhalten, kann für eine bestimmte Dauer mit einem festen Frischluft-Umluft-Verhältnis belüftet werden und die Änderung des Luftqualitätswertes entsprechend analysiert werden. Hierzu kann gegebenenfalls auch kurzfristig ein Druckschutzbetrieb simuliert werden, d.h. ohne äußeres Druckereignis mit einem Umluftanteil von 100% belüftet werden.

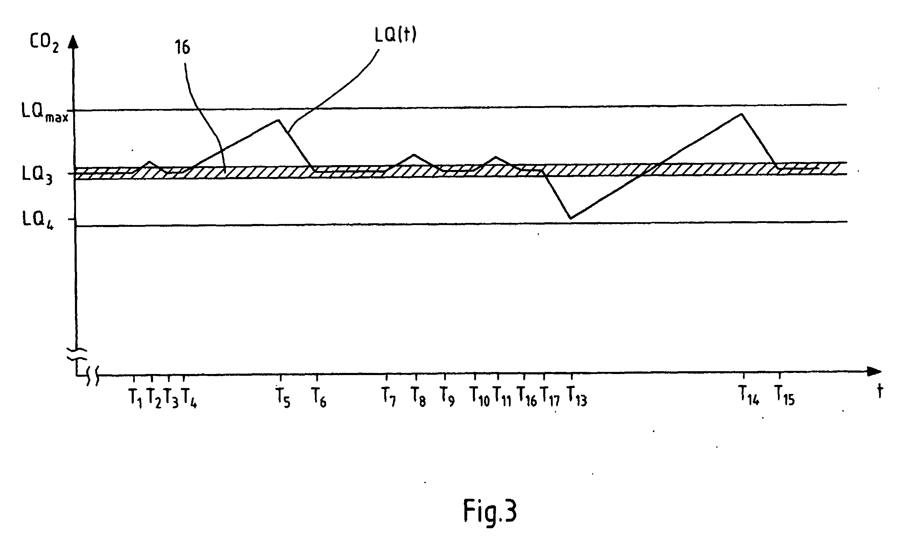

Figur 3 stellt für den bestimmten Fahrstreckenabschnitt aus Figur 2 schematisch den zeitlichen Verlauf LQ(t) eines Luftqualitätswertes, nämlich der $CO_2$-Konzentration, bei Durchführung einer weiteren bevorzugten Variante des erfindungsgemäßen Verfahrens mit der Anordnung aus Figur 1 dar:

Der Verlauf des Luftqualitätswertes LQ(t) und die Ansteuerung der Bestandteile der Anordnung entspricht bis zum Zeitpunkt $T_{11}$ und zwischen den Zeitpunkt $T_{13}$ und $T_{15}$ dem Verlauf bzw. der Ansteuerung, wie sie zu Figur 2 beschrieben wurde, sodass an dieser Stelle lediglich auf die obigen Ausführungen Bezug genommen wird. Es sollen hier lediglich die Unterschiede zur Variante aus Figur 2 dargestellt werden.

Ein Unterschied besteht darin, dass im Normalbetrieb ohne Druckereignis stets eine frischluftminimierte Ansteuerung durch die Steuereinrichtung erfolgt, die zur Einhaltung eines Toleranzbereichs 16 um einen vorgegebenen Luftqualitätswertes $LQ_3$ dient. Der Luftqualitätswert $LQ_3$ entspricht dabei dem Luftqualitätswert $LQ_1$ aus Figur 2 und der Toleranzbereichs 16 entspricht dem Toleranzbereich 14 aus Figur 2.

Zum Zeitpunkt $T_{10}$ tritt ein vergleichsweise kurzes Druckereignis ein, das bei $T_{11}$ endet. Aus dem Streckenverlauf und der Position und Geschwindigkeit des Fahrzeugs ist jedoch bekannt, dass zum Zeitpunkt $T_{13}$ ein sehr langes Druckereignis eintreten wird. Beeinflusst durch entsprechende Signale der externen Zugbeeinflussung schaltet die Steuereinrichtung daher zunächst bei $T_{16}$ in den oben beschriebenen frischluftminimierten Normalbetrieb. Zum Zeitpunkt $T_{16}$, also vor dem Druckereignis bei $T_{13}$, wird ebenfalls beeinflusst durch entsprechende Signale der externen Zugbeeinflussung in einen zweiten Spülbetrieb umgeschaltet, der bis zum Zeitpunkt $T_{13}$ dauert. Dabei wird durch die entsprechend der abgeschätzten tatsächlichen Besetzung des Fahrzeugs gewählte Dauer des zweiten Spülbetriebs die $CO_2$-Konzentration auf einen Wert $LQ_4$ unterhalb $LQ_3$ abgesenkt. Dies dient dazu, sicherzustellen, dass die Obergrenze $LQ_{max}$ der $CO_2$-Konzentration in dem nachfolgenden langen Druckereignis zwischen $T_{13}$ und $T_{14}$ nicht überschritten wird.

Zum Zeitpunkt $T_{14}$ wird schließlich wieder in einen zweiten Spülbetrieb umgeschaltet, um die $CO_2$-Konzentration schnell auf den Wert $LQ_3$ abzusenken. Zum Zeitpunkt $T_{15}$ wird dann wieder in den Normalbetrieb umgeschaltet.

Die Erfindung wurde vorstehend anhand von Beispielen beschrieben, bei denen nur im Normalbetrieb ein vorgegebener enger Toleranzbereich des Luftqualitätswertes eingehalten wurde. Es versteht sich jedoch, dass bei anderen Varianten der Erfindung abhängig von der Besetzung und der Wahl des Toleranzbereichs auch während des Spülbetriebs der entsprechende Toleranzbereich eingehalten sein kann.

**Patentansprüche**

1. Verfahren zur Klimatisierung schnell fahrender Fahrzeuge, insbesondere Schienenfahrzeuge, bei dem zur Einhaltung wenigstens einer vorgegebenen Grenze wenigstens eines Luftqualitätswertes im Fahrzeuginnenraum (8) Frischluft aus der Umgebung des Fahrzeugs angesaugt und über wenigstens eine Luftbehandlungseinrichtung (7) aufbereitete Zuluft in den Fahrzeuginnenraum (8) geleitet wird, die einen Frischluftanteil und/oder einen Umluftanteil an aus dem Fahrzeuginnenraum (8) rückgeführter Umluft enthält, **dadurch gekennzeichnet, dass** die Steuerung über Mittel (6) zur Ermittlung des Luftqualitätswertes erfolgt, wobei der Frischluftanteil in Abhängigkeit von der Besetzung im Fahrzeuginnenraum (8) derart minimiert gehalten wird, dass ein vorgegebener Toleranzbereich des Luftqualitätswerts zumindest in einem Normalbetrieb ohne Druckereignisse im wesentlichen eingehalten wird.

2.  Verfahren nach Anspruch 1, **dadurch gekennzeichnet, dass** der Frischluftanteil in Abhängigkeit von der Besetzung im Fahrzeuginnenraum (8) derart minimiert gehalten wird, dass ein vorgegebener enger Toleranzbereich des Luftqualitätswerts im wesentlichen eingehalten wird, wobei der Toleranzbereich des Luftqualitätswerts insbesondere im wesentlichen höchstens 20%, vorzugsweise höchstens 10%, eines vorgegebenen Luftqualitätswerts beträgt.

3.  Verfahren nach Anspruch 1 oder 2, **dadurch gekennzeichnet, dass** der Toleranzbereich um einen variablen Luftqualitätswert eingehalten wird, wobei die Variation des Luftqualitätswerts vorzugsweise in Abhängigkeit von der Position des Fahrzeugs auf einem bekannten Streckenverlauf erfolgt.

4.  Verfahren nach einem der vorhergehenden Ansprüche, **dadurch gekennzeichnet, dass**

    -   im Druckschutzfall in Folge eines äußeren Druckereignisses ein Druckschutzbetrieb erfolgt, in dem der Frischluftanteil im wesentlichen gleich Null ist,

    -   nach Ende des Druckschutzfalls und vor der Umschaltung auf einen Normalbetrieb ein Spülbetrieb erfolgt, bei dem der Frischluftanteil gegenüber dem Frischluftanteil im Normalbetrieb gleich oder größer gehalten wird.

5.  Verfahren nach Anspruch 4, **dadurch gekennzeichnet, dass** zur Steuerung des Frischluftanteils und des Umluftanteils im Spülbetrieb in einem ersten Schritt

    -   zur Abschätzung der Besetzung im Fahrzeuginnenraum ein für die Veränderung des Luftqualitätswertes während des Druckschutzbetriebs repräsentativer Veränderungswert ermittelt wird sowie

    -   der Luftqualitätswert in einem ersten Vergleich am Ende des Druckschutzbetriebs mit einem vorgegebenen ersten Grenzwert verglichen wird und

    in einem zweiten Schritt in Abhängigkeit von dem Veränderungswert und dem ersten Vergleich der Frischluftanteil während des Spülbetriebs bestimmt wird.

6.  Verfahren nach Anspruch 5, **dadurch gekennzeichnet, dass** in dem zweiten Schritt in Abhängigkeit von dem Veränderungswert und dem ersten Vergleich der Einsetzzeitpunkt des Spülbetriebs und/oder die Dauer des Spülbetriebs und/oder die Intensität des Spülbetriebs bestimmt wird.

7.  Verfahren nach einem der vorhergehenden Ansprüche, **dadurch gekennzeichnet, dass** als Luftqualitätswert ein für die $CO_2$-Konzentration im Fahrzeuginnenraum (8) repräsentativer Wert und/oder ein für eine andere chemische oder biologische Meßgröße repräsentativer Wert verwendet wird.

8.  Verfahren nach einem der vorhergehenden Ansprüche, **dadurch gekennzeichnet, dass**

    -   bei einem Normalbetrieb ohne Druckereignisse und/oder bei einem ersten Spülbetrieb nach einem kurzen Druckereignis über eine Fortluft-Lüftereinrichtung (3) Fortluft in die Umgebung des Fahrzeugs geleitet wird, wobei die Fortluft-Lüftereinrichtung (3) Abluft aus dem Fahrzeuginnenraum (8) mit einem ersten Luftstrom fördert, und

    -   die Fortluft-Lüftereinrichtung (3) bei einem zweiten Spülbetrieb nach einem hinreichend langen Druckereignis zur gegenüber dem ersten Spülbetrieb beschleunigten Anpassung des Luftqualitätswertes im Fahrzeuginnern (8) an einen vorgegebenen Luftqualitätswert Abluft mit einem gegenüber dem ersten Luftstrom erhöhten zweiten Luftstrom fördert, wobei diese Betriebsart insbesondere beibehalten wird, bis der Luftqualitätswert einen vorgegebenen Wert erreicht oder ein neues Drukkereignis auftritt..

9.  Verfahren nach Anspruch 8, **dadurch gekennzeichnet, dass** die Fortluft-Lüftereinrichtung (3) bei Auftreten eines Druckereignisses abgeschaltet wird.

10. Verfahren nach einem der vorhergehenden Ansprüche, **dadurch gekennzeichnet, dass** die Umschaltung zwischen Betriebsarten, insbesondere die Umschaltung auf einen Druckschutzbetrieb und/oder einen Spülbetrieb, bei dem der Frischluftanteil gegenüber dem Frischluftanteil im einem Normalbetrieb ohne Druckereignis gleich oder größer gehalten wird, durch ein Signal der externen Zugbeeinflussung ausgelöst wird.

11. Anordnung zur Klimatisierung schnell fahrender Fahrzeuge, insbesondere Schienenfahrzeuge, insbesondere zur Durchführung des Verfahrens nach einem der vorhergehenden Ansprüche, mit einer Zulufteinrichtung (10) zum Einleiten von Zuluft in den Fahrzeuginnenraum (8), die eine Frischluftzufuhreinrichtung (1, 2) zum Zuführen von Frischluft aus der Umgebung des Fahrzeugs in den Fahrzeuginnenraum (8), eine Umluftrückführeinrichtung (5) zum Rückführen von Umluft aus dem Fahrzeuginnenraum (8) in den Fahrzeuginnenraum (8) sowie wenigstens eine Luftbehandlungseinrichtung (7) zum Aufbereiten der Zuluft umfasst, und einer damit verbundenen Steuereinrichtung (12) zum Steuern des Verhältnisses zwischen dem Frischluftanteil und dem Umluftanteil der Zuluft, die zur Einhaltung wenigstens einer vorgegebenen Grenze des Luftqualitätswertes im Fahrzeuginnenraum (8) ausgebildet ist, **dadurch gekennzeichnet, dass** die Steuereinrichtung (12) Mittel (6) zur Ermittlung wenigstens eines Luftqualitätswertes im Fahrzeuginnenraum (8) umfasst und zur Minimierung des Frischluftanteils zumindest in einem Normalbetrieb ohne Druckereignisse sowie im wesentlichen unter Einhaltung eines vorgegebenen Toleranzbereichs des Luftqualitätswerts in Abhängigkeit von der Besetzung im Fahrzeuginnenraum (8) ausgebildet ist.

12. Anordnung nach Anspruch 11, **dadurch gekennzeichnet, dass** Steuereinrichtung (12) zur Minimierung des Frischluftanteils in Abhängigkeit von der Besetzung im Fahrzeuginnenraum (8) und im wesentlichen unter Einhaltung eines vorgegebenen engen Toleranzbereichs des Luftqualitätswerts ausgebildet ist, wobei der Toleranzbereich des Luftqualitätswerts insbesondere im wesentlichen höchstens 20%, vorzugsweise höchstens 10%, eines vorgegebenen Luftqualitätswerts beträgt.

13. Anordnung nach Anspruch 11 oder 12, **dadurch gekennzeichnet, dass** die Steuereinrichtung (12) zur Abschätzung der Besetzung im Fahrzeuginnenraum (8) zur Ermittlung eines für die Veränderung des Luftqualitätswertes während des Druckschutzbetriebs repräsentativen Veränderungswerts ausgebildet ist sowie zum Vergleichen des Luftqualitätswerts in einem ersten Vergleich am Ende eines Druckschutzbetriebs mit einem vorgegebenen ersten Grenzwert ausgebildet ist und zum anschließenden Bestimmen des Frischluftanteils während eines Spülbetriebs nach dem Druckschutzbetrieb in Abhängigkeit von dem Veränderungswert und dem ersten Vergleich ausgebildet ist,

14. Anordnung nach Anspruch 13, **dadurch gekennzeichnet, dass** die Steuereinrichtung (12) zum Bestimmen des Einsetzzeitpunkts des Spülbetriebs und/oder der Dauer des Spülbetriebs und/oder der Intensität des Spülbetriebs in Abhängigkeit von dem Veränderungswert und dem ersten Vergleich ausgebildet ist.

15. Anordnung nach einem der Ansprüche 11 bis 14, **dadurch gekennzeichnet, dass** die Mittel zur Ermittlung des Luftqualitätswerts einen Sensor (6) für eine für die $CO_2$-Konzentration im Fahrzeuginnenraum (8) repräsentative Meßgröße umfassen.

16. Anordnung nach einem der Ansprüche 11 bis 15, **dadurch gekennzeichnet, dass** eine durch die Steuereinrichtung (12) gesteuerte Fortluft-Lüftereinrichtung (3) zum Ableiten von Fortluft in die Umgebung des Fahrzeugs vorgesehen ist, die

- bei einem Normalbetrieb ohne Druckereignisse und/oder bei einem ersten Spülbetrieb nach einem kurzen Druckereignis aus dem Fahrzeuginnenraum (8) einen ersten Luftstrom fördert und

- bei einem zweiten Spülbetrieb nach einem hinreichend langem Druckereignis zur gegenüber dem ersten Spülbetrieb beschleunigten Anpassung des Luftqualitätswertes im Fahrzeuginnern (8) an einen vorgegebenen Luftqualitätswert einen gegenüber dem ersten Luftstrom erhöhten zweiten Luftstrom fördert, wobei diese Betriebsart insbesondere beibehalten wird, bis der Luftqualitätswert einen vorgegebenen Wert erreicht oder ein neues Druckereignis auftritt.

17. Anordnung nach Anspruch 16, **dadurch gekennzeichnet, dass** die Fortluft-Lüftereinrichtung wenigstens einen Fortluft-Lüfter (3) umfasst, der mindestens zweistufig drehzahlstellbar ausgebildet ist.

18. Anordnung nach Anspruch 16 oder 17, **dadurch gekennzeichnet, dass** die Steuereinrichtung (12) zum Abschalten des Fortluft-Lüfters (3) bei Auftreten eines Druckereignisses ausgebildet ist.

19. Anordnung nach einem der Ansprüche 11 bis 18, **dadurch gekennzeichnet, dass** die Steuereinrichtung (12) zur Umschaltung zwischen Betriebsarten, insbesondere zur Umschaltung auf Druckschutzbetrieb und/oder einen Spülbetrieb, bei dem der Frischluftanteil gegenüber dem Frischluftanteil im einem Normalbetrieb ohne Druckereignis gleich oder größer gehalten wird, ausgelöst durch ein Signal der externen Zugbeeinflussung ausgebildet ist.

**20.** Anordnung nach einem der Ansprüche 11 bis 19, **dadurch gekennzeichnet, dass** Zulufteinrichtung (10) durch die Steuereinrichtung (12) gesteuerte Mittel (5) zum Einstellen des Verhältnisses zwischen dem Frischluftanteil und dem Umluftanteil der Zuluft, die insbesondere eine stellbare, vorzugsweise stetig stellbare, Umluftblende (5) im Bereich der Umluftrückführeinrichtung umfassen.

**21.** Anordnung nach einem der Ansprüche 11 bis 20, **dadurch gekennzeichnet, dass** die Zulufteinrichtung (10) einen erste Zuluft-Lüfter (2) umfasst, der Frischluft und Umluft fördert.

**22.** Anordnung nach einem der Ansprüche 11 bis 21, **dadurch gekennzeichnet, dass** die Steuereinrichtung (12) zur Erfassung und Berücksichtigung von Druckereignissen wenigstens einen Drucksensor zur Erfassung der Druckverhältnisse im Fahrzeuginnenraum (8) umfasst, der vorzugsweise im Fahrzeuginnenraum (8) angeordnet ist.

## Claims

**1.** A method for air conditioning of high-speed vehicles, in particular, rail vehicles, in which for keeping of at least one predetermined limit of at least one air quality value in the vehicle interior (8), fresh air is taken in from the environment of the vehicle and supply air, processed via at least one air conditioning device (7), is supplied to the vehicle interior (8), said supply air including a fresh air portion and/or a recirculating air portion from the recirculating air recirculated from the vehicle interior (8), **characterized in that** the control takes place via means (6) for determining the air quality value, wherein said fresh air portion is kept to a minimum in dependence on the occupancy in the vehicle interior (8) in such a manner that a predetermined tolerance range of said air quality value is substantially kept at least in normal operation without pressure events.

**2.** The method according to claim 1, **characterized in that** the fresh air portion is kept at a minimum depending on the occupancy in the vehicle interior (8) in such a manner that a predetermined narrow tolerance range of said air quality value is substantially kept, wherein the tolerance range of the air quality value, in particular, amounts essentially to 20 % at the highest, preferably, 10 % at the highest, of a predetermined air quality value.

**3.** The method according to claim 1 or 2, **characterized in that** said tolerance range is kept around a variable air quality value, wherein, preferably, the variation of said air quality value takes place in dependence on the position of the vehicle on a known route course.

**4.** The method according to any one of the preceding claims, **characterized in that**,

- in the event of a pressure protection situation as a result of an outer pressure event, a pressure protection operation takes place, in which the fresh air portion essentially is equal to zero,

- after the end of said pressure protection situation and before shifting to a normal operation, a scavenging operation takes place, in which the fresh air portion is kept the same or greater relative to the fresh air portion in normal operation.

**5.** The method according to claim 4, **characterized in that** for control of the fresh air portion and the recirculation portion in the scavenging operation, in a first step:

- for assessing the occupancy of the vehicle interior, a change value representative for the change of said air quality value during the pressure protection operation is determined, and

- said air quality value is compared, in a first comparison at the end of said pressure protection operation, with a predetermined first threshold value, and,

in a second step, depending on the change value and the first comparison, the fresh air portion during the scavenging operation is determined.

**6.** The method according to claim 5, **characterized in that** in the second step, depending on the change value and the first comparison, the initiation moment of the scavenging operation and/or the duration of the scavenging operation and/or the intensity of the scavenging operation is determined.

**7.** The method according to one of the preceding claims, **characterized in that** as the air quality value, a value representative for the $CO_2$ concentration in the vehicle interior (8) and/or a value representative of another chemical or biological measurement category is used.

**8.** The method according to any one of the preceding claims, **characterized in that**,

- in a normal operation without pressure events and/or in a first scavenging operation after a short pressure event, exhaust air is supplied into the surrounding environment of the vehicle via an exhaust air-blower device (3), wherein the exhaust air-blower device (3) supplies exhaust air from the vehicle interior (8) with a first air flow, and,

- after a sufficiently long pressure event, for an adaptation of the air quality value in the vehicle interior (8) to a predetermined air quality value, said adaptation being accelerated compared with the first scavenging operation, the exhaust air-blower device (3), in a second scavenging operation, supplies exhaust air with a second air flow increased relative to the first air flow, wherein this mode of operation is maintained, in particular, until the air quality value reaches a predetermined value or a new pressure event occurs.

9. The method according to claim 8, **characterized in that** the exhaust air-blower device (3) is switched off with occurrence of a pressure event.

10. The method according to any one of the preceding claims, **characterized in that** the switch-over between types of operation, in particular, the switch-over to a pressure protection operation and/or a scavenging operation, in which the fresh air portion is kept the same or greater relative to the fresh air portion in a normal operation without pressure event, is triggered by a signal of the external train control.

11. An assembly for air conditioning of high speed vehicles, in particular, rail vehicles, in particular, for performing the method according to any one of the preceding claims, with an air supply device (10) for supplying supply air into the vehicle interior (8), which includes a fresh air supply device (1, 2) for supplying fresh air from the surrounding environment of the vehicle into the vehicle interior (8), a recirculating air return device (5) for returning recirculating air from the vehicle interior (8) into the vehicle interior (8), as well as at least one air conditioning device (7) for conditioning the supply air, and a control device (12) connected thereto for controlling the ratio between the fresh air portion and the recirculating air portion of the supply air, which is arranged for keeping at least one predetermined limit of the air quality value in the vehicle interior (8), **characterized in that** the control device (12) comprises means (6) for determining at least one air quality value in the vehicle interior (8) and is arranged for minimizing the fresh air portion at least in a normal operation without pressure events as well as for essentially keeping a predetermined tolerance range of said air quality value in dependence on the occupancy in the vehicle interior (8).

12. The assembly according to claim 11, **characterized**

**in that** the control device (12) is formed for minimizing the fresh air portion in dependence on the occupancy in the vehicle interior (8) and for essentially keeping a predetermined narrow tolerance range of the air quality value, wherein the tolerance range of the air quality value amounts in particular essentially to 20 % at the most, preferably, 10 % at the most, of a predetermined air quality value.

13. The assembly according to claim 11 or 12, **characterized in that** the control device (12), for assessing the occupancy in the vehicle interior (8), is arranged for determining a change value representative for the change of the air quality value during pressure protection operation, as well as arranged for comparison, in a first comparison at the end of a pressure protection operation, of the air quality value with a predetermined first threshold value and for subsequent determination of the fresh air portion during a scavenging operation after the pressure protection operation in dependence on the change value and the first comparison.

14. The assembly according to claim 13, **characterized in that** the control device (12) is arranged for determining the initiation moment of the scavenging operation and/or the duration of the scavenging operation and/or the intensity of the scavenging operation in dependence on the change value and the first comparison.

15. The assembly according to any one of claims 11 through 14, **characterized in that** the means for determining the air quality value includes a sensor (6) for a measured value representative for the $CO_2$ concentration in the vehicle interior (8).

16. The assembly according to one of claims 11 through 15, **characterized in that** an exhaust air-blower device (3) controlled by the control device (12) is provided for conducting away exhaust air into the surrounding environment of the vehicle, which,

- in a normal operation without pressure events and/or with a first scavenging operation after a short pressure event, supplies a first air flow from the vehicle interior (8) and,

- in a second scavenging operation, after a sufficiently long pressure event, for an adaptation of the air quality value in the vehicle interior (8) to a predetermined air quality value, said adaptation being accelerated relative to the first scavenging operation, supplies a second air flow increased relative to the first air flow, wherein this mode of operation is maintained, in particular, until said air quality value reaches a predetermined value or a new pressure event occurs.

**17.** The assembly according to claim 16, **characterized in that** the exhaust air-blower device includes at least one exhaust air blower (3), which is arranged for being at least two-stage speed adjustable.

**18.** The assembly according to claim 16 or 17, **characterized in that** the control device (12) is arranged for switching off the exhaust air blower (3) with the occurrence of a pressure event.

**19.** The assembly according to any one of claims 11 through 18, **characterized in that** the control device (12), for switching-over between modes of operation, in particular, for switching-over to pressure protection operation and/or a scavenging operation, in which the fresh air portion is kept the same or greater relative to the fresh air portion in a normal operation without pressure event, is arranged to be triggered by a signal of the external train control.

**20.** The assembly according to any one of claims 11 through 19, **characterized in that** the air supply device (10) comprises means (5) for adjustment of the ratio between the fresh air portion and the recirculating air portion of the supply air, said means being controlled by the control device (12), and comprising, in particular, an adjustable, preferably continuously adjustable, recirculating air screen (5) in the area of the recirculating air return device.

**21.** The assembly according to any one of claims 11 through 20, **characterized in that** the air supply device (10) includes a first supply air blower (2), which supplies fresh air and recirculating air.

**22.** The assembly according to any one of claims 11 through 21, **characterized in that** the control device (12), for determination and consideration of pressure events, comprises at least one pressure sensor for determining the pressure conditions in the vehicle interior (8), and which, preferably, is arranged in the vehicle interior (8).

**Revendications**

**1.** Procédé de climatisation de véhicules circulant rapidement, notamment de véhicules ferroviaires, dans lequel, pour respecter au moins une limite prédéfinie d'au moins une valeur qualitative de l'air dans l'habitacle du véhicule (8), de l'air frais est aspiré à partir de l'environnement du véhicule et de l'air apporté préparé à l'aide d'au moins un dispositif de traitement d'air (7) et dirigé dans l'habitacle du véhicule (8), lequel air apporté contient une part d'air frais et/ou une part d'air recyclé composée d'air recyclé renvoyé hors de l'habitacle du véhicule (8), **caractérisé en ce que** la commande a lieu au moyen de moyens (6) de détermination de la valeur qualitative de l'air, la part d'air frais étant maintenue à un minimum en fonction de l'occupation de l'habitacle du véhicule (8) de manière à ce qu'une plage de tolérance prédéfinie de la valeur qualitative de l'air soit sensiblement respectée du moins en fonctionnement normal sans incidents de pression.

**2.** Procédé selon la revendication 1, **caractérisé en ce que** la part d'air frais est maintenue à un minimum en fonction de l'occupation de l'habitacle du véhicule (8) de manière à ce qu'une plage de tolérance étroite prédéfinie de la valeur qualitative de l'air soit sensiblement respectée, la plage de tolérance de la valeur qualitative de l'air s'élevant notamment à sensiblement 20 % au plus, de préférence 10 % au plus, d'une valeur qualitative de l'air prédéfinie.

**3.** Procédé selon la revendication 1 ou 2, **caractérisé en ce que** la plage de tolérance autour d'une valeur variable qualitative de l'air est respectée, la variation de la valeur qualitative de l'air ayant lieu de préférence en fonction de la position du véhicule sur une trajectoire connue.

**4.** Procédé selon l'une quelconque des revendications précédentes, **caractérisé en ce que**

- dans le cas d'une protection contre la pression suite à un incident de pression extérieure, a lieu un fonctionnement avec protection contre la pression dans lequel la part d'air frais est sensiblement égale à zéro;

- après la fin de cette protection contre la pression et avant la commutation en fonctionnement normal, a lieu une opération de rinçage pendant laquelle la part d'air frais est maintenue supérieure ou égale à la part d'air frais en fonctionnement normal.

**5.** Procédé selon la revendication 4, **caractérisé en ce que**, pour contrôler la part d'air frais et la part d'air recyclé pendant l'opération de rinçage, au cours d'une première étape,

- pour évaluer l'occupation de l'habitacle du véhicule, une valeur de changement représentative du changement de la valeur qualitative de l'air pendant le fonctionnement avec protection contre la pression est déterminée et

- la valeur qualitative de l'air est comparée lors d'une première comparaison, à la fin du fonctionnement avec protection contre la pression, avec une première valeur limite prédéfinie et,

au cours d'une deuxième étape, en fonction de la valeur de changement et de la première comparaison, la part d'air frais pendant l'opération de rinçage est définie.

**6.** Procédé selon la revendication 5, **caractérisé en ce qu'**au cours de la deuxième étape, le moment de mise en oeuvre de l'opération de rinçage et/ou la durée de l'opération de rinçage et/ou l'intensité de l'opération de rinçage est défini en fonction de la valeur de changement et de la première comparaison.

**7.** Procédé selon l'une quelconque des revendications précédentes, **caractérisé en ce qu'**on utilise comme valeur représentative de la qualité de l'air une valeur représentative de la concentration en $CO_2$ dans l'habitacle du véhicule (8) et/ou une valeur représentative d'une autre grandeur caractéristique chimique ou biologique.

**8.** Procédé selon l'une quelconque des revendications précédentes, **caractérisé en ce**

- **qu'**en cas de fonctionnement normal sans incidents de pression et/ou en cas d'une première opération de rinçage après un bref incident de pression, de l'air sortant est dirigé vers l'environnement du véhicule par un dispositif aérateur d'air sortant (3), le dispositif aérateur d'air sortant (3) transportant de l'air sortant hors de l'habitacle du véhicule (8) en un premier courant d'air, et

- **que** le dispositif aérateur à air continu (3), en cas d'une deuxième opération de rinçage, après un incident de pression suffisamment long, aux fins d'une adaptation accélérée par rapport à la première opération de rinçage de la valeur qualitative de l'air dans l'habitacle du véhicule (8) à une valeur qualitative de l'air prédéfinie, transporte de l'air sortant en un deuxième courant d'air élevé par rapport au premier courant d'air, ce mode de fonctionnement étant particulièrement maintenu jusqu'à ce que la valeur qualitative de l'air atteigne une valeur prédéterminée ou qu'un nouvel incident de pression survienne.

**9.** Procédé selon la revendication 8, **caractérisé en ce que** le dispositif aérateur d'air sortant (3) est désactivé en cas de survenance d'un incident de pression.

**10.** Procédé selon l'une quelconque des revendications précédentes, **caractérisé en ce que** la commutation entre les modes de fonctionnement, notamment la commutation vers un fonctionnement avec protection contre la pression et/ou vers une opération de rinçage, dans laquelle la part d'air frais est maintenue supérieure ou égale à la part d'air frais en fonctionnement normal sans incident de pression, est déclenchée par un signal d'influence extérieure sur le train.

**11.** Arrangement pour la climatisation de véhicules circulant rapidement, notamment de véhicules ferroviaires, notamment pour la réalisation du procédé selon l'une quelconque des revendications précédentes, comportant un dispositif d'apport d'air (10) servant à introduire de l'air apporté dans l'habitacle du véhicule (8) et qui comprend un dispositif d'apport d'air frais (1, 2) servant à acheminer de l'air frais provenant de l'environnement du véhicule dans l'habitacle du véhicule (8), un dispositif de renvoi d'air recyclé (5) servant à renvoyer l'air recyclé provenant de l'habitacle du véhicule (8) dans l'habitacle du véhicule (8) ainsi qu'au moins un dispositif de traitement d'air (7) servant à préparer l'air apporté, et un dispositif de commande (12) rattaché au dernier servant à contrôler le rapport entre la part d'air frais et la part d'air recyclé de l'air apporté et qui est conçu de manière à respecter au moins une limite prédéfinie de valeur qualitative de l'air dans l'habitacle du véhicule (8), **caractérisé en ce que** le dispositif de commande (12) comprend des moyens (6) pour déterminer au moins une valeur qualitative de l'air dans l'habitacle du véhicule (8) et est conçu de manière à minimiser la part d'air frais du moins en fonctionnement normal sans incidents de pression ainsi qu'à respecter sensiblement une plage de tolérance prédéfinie de la valeur qualitative de l'air en fonction de l'occupation de l'habitacle du véhicule (8).

**12.** Arrangement selon la revendication 11, **caractérisé en ce que** le dispositif de commande (12) est conçu de manière à minimiser la proportion d'air frais en fonction de l'occupation de l'habitacle du véhicule (8) et à respecter sensiblement une plage de tolérance étroite prédéfinie de la valeur qualitative de l'air, la plage de tolérance de la valeur qualitative de l'air s'élevant à notamment sensiblement 20 % au plus, de préférence 10 % au plus, d'une valeur qualitative de l'air prédéfinie.

**13.** Arrangement selon la revendication 11 ou 12, **caractérisé en ce que** le dispositif de commande (12) est conçu de manière à déterminer une valeur de changement représentative du changement de la valeur qualitative de l'air pendant le fonctionnement avec protection contre la pression pour évaluer l'occupation de l'habitacle du véhicule (8) ainsi que de manière à comparer, lors d'une première comparaison à la fin d'un fonctionnement avec protection contre la pression, la valeur qualitative de l'air avec une première valeur limite prédéfinie et à définir ensuite la part d'air frais pendant une opération de rinçage après le fonctionnement avec protection contre la pression en fonction de la valeur de changement et de la première comparaison.

14. Arrangement selon la revendication 13, **caractérisé en ce que** le dispositif de commande (12) est conçu de manière à définir le moment de mise en oeuvre de l'opération de rinçage et/ou la durée de l'opération de rinçage et/ou l'intensité de l'opération de rinçage en fonction de la valeur de modification et de la première comparaison.

15. Arrangement selon l'une quelconque des revendications 11 à 14, **caractérisé en ce que** les moyens de détermination de la valeur qualitative de l'air comprennent un capteur (6) pour une grandeur caractéristique représentative de la concentration en $CO_2$ dans l'habitacle du véhicule (8).

16. Arrangement selon l'une quelconque des revendications 11 à 15, **caractérisé en ce qu'**un dispositif aérateur d'air sortant (3) contrôlé par le dispositif de commande (12) est prévu pour évacuer de l'air sortant dans l'environnement du véhicule, lequel dispositif aérateur d'air sortant,

- en fonctionnement normal sans incidents de pression et/ou en cas d'une première opération de rinçage après un bref incident de pression, transporte un premier courant d'air hors de l'habitacle du véhicule (8),

- en cas d'une deuxième opération de rinçage, après un incident de pression suffisamment long, aux fins d'une adaptation accélérée par rapport à la première opération de rinçage de la valeur qualitative de l'air dans l'habitacle du véhicule (8) à une valeur qualitative de l'air prédéfinie, transporte un deuxième courant d'air élevé par rapport au premier courant d'air, ce mode de fonctionnement étant particulièrement maintenu jusqu'à ce que la valeur qualitative de l'air atteigne une valeur prédéfinie ou qu'un nouvel incident de pression survienne.

17. Arrangement selon la revendication 16, **caractérisé en ce que** le dispositif aérateur d'air sortant comprend au moins un aérateur d'air sortant (3) qui est conçu avec une possibilité de réglage de la vitesse de rotation à au moins deux niveaux.

18. Arrangement selon la revendication 16 ou 17, **caractérisé en ce que** le dispositif de commande (12) est conçu de manière à désactiver l'aérateur d'air sortant (3) en cas de survenance d'un incident de pression.

19. Arrangement selon l'une quelconque des revendications 11 à 18, **caractérisé en ce que** le dispositif de commande (12), pour commuter entre les modes de fonctionnement, notamment à commuter vers le fonctionnement avec protection contre la pression et/ou vers une opération de rinçage, dans laquelle la part d'air frais est maintenue supérieure ou égale à la part d'air frais en fonctionnement normal sans incident de pression, est conçu de manière à être déclenché par un signal d'influence extérieure sur le train.

20. Arrangement selon l'une quelconque des revendications 11 à 19, **caractérisé en ce que** le dispositif d'apport d'air (10) comprend des moyens (5) contrôlés par le dispositif de commande (12) et servant à régler le rapport entre la part d'air frais et la part d'air recyclé de l'air apporté, qui comprennent notamment un bandeau d'air recyclé (5) réglable, de préférence réglable en continu, dans la région du dispositif de renvoi d'air recyclé.

21. Arrangement selon l'une quelconque des revendications 11 à 20, **caractérisé en ce que** le dispositif d'apport d'air (10) comprend un premier aérateur d'apport d'air (2) qui transporte de l'air frais et de l'air recyclé.

22. Arrangement selon l'une quelconque des revendications 11 à 21, **caractérisé en ce que** le dispositif de commande (12), pour enregistrer et pour prendre en compte les incidents de pression, comprend au moins un capteur de pression servant à enregistrer les conditions de pression dans l'habitacle du véhicule (8) et qui est disposé de préférence dans l'habitacle du véhicule (8).

EP 1 370 451 B1

Fig.1

17

Fig.2

Fig.3